Europäisches Patentamt

European Patent Office

Office européen des brevets

(11) Publication number: **0 086 592**
A1

# EUROPEAN PATENT APPLICATION

(21) Application number: 83300519.2

(22) Date of filing: 02.02.83

(51) Int. Cl.³: **C 02 F 1/72**

(30) Priority: 08.02.82 US 347054

(43) Date of publication of application: 24.08.83
Bulletin 83/34

(84) Designated Contracting States: **BE DE FR GB IT NL**

(71) Applicant: Interox America, 3333 Richmond Avenue P.O. Box 27328, Houston Texas 77027 (US)

(72) Inventor: Manissero, Claudio E., 260 El Dorado Blvd, Y2303, Webster Texas 77598 (US)
Inventor: Froelich, Emery M., 3714 Fernview, Kingwood Texas 77339 (US)
Inventor: Vineyard, Mark K., P.O. Box 34920, Houston Texas 77234 (US)

(74) Representative: Pearce, Timothy et al, Laporte Industries Ltd., Group Patent Department, P.O. Box 2, Moorfield Road, Widnes, Cheshire WA8 OJU (GB)

(54) Abatement of hydrogen sulfide in aqueous media using hydrogen peroxide and transition metal catalyst.

(57) Aqueous media containing the toxic and corrosive gas hydrogen sulfide is treated with hydrogen peroxide in the presence of transition metal catalyst to oxidize the sulfide to a non-volatile form. The mole ratio of hydrogen peroxide to hydrogen sulfide is less than 1:1. Abatement in excess of 95% can be achieved in less than one minute at ambient temperature. For rapid reaction it is preferable to introduce the transition metal to the media before introduction of the hydrogen peroxide.

EP 0 086 592 A1

### Field of the Invention

This invention relates to the abatement of hydrogen sulfide in aqueous media. More particularly, it relates to the abatement of hydrogen sulfide in liquid aqueous media, including various waste liquids such as geothermal steam condensate, drilling fluids, paper mill effluent, sour water, sewage and the like.

Hydrogen sulfide is a highly toxic and corrosive gas emitted from municipal, industrial and geothermal plants. Exposure to humans is regulated in the United States by OSHA and NIOSH, and discharge to the environment is regulated by the Environmental Protection Agency. Any commercial process which produces $H_2S$ as a waste product must include treatment of the pollutant in order to be approved by the regulatory agencies. Geothermal plants, due to large volumes of condensate containing high sulfide levels, have presented a particular challenge for the control of sulfides released to the environment.

Prior to the present invention it has been proposed to oxidize hydrogen sulfide in liquid aqueous media to non-volatile and non-toxic forms with hydrogen peroxide. One such process, described in the Journal of Petroleum Technology, May, 1981, on pages 914-920, involves the use of iron catalyst. A reaction time of less than 20 seconds is reported for over 90% sulfide abatement at a pH of 7.8. However, a rather high mole ratio of hydrogen peroxide to hydrdogen sulfide is disclosed. Where a reaction time of less than 20 seconds is reported, the mole ratio is 2.3 to 1. While the results attributed to this sulfide abatement are good, the requirement for hydrogen peroxide reagent is high.

It is an object of the present invention to provide a new or improved process for the abatement of hydrogen sulfide in liquid aqueous media. It is a further object to provide such a process in which hydrogen peroxide is used to oxidize the hydrogen sulfide to non-volatile and non-toxic forms. It is a still further object to provide such a

0086592

process in at least some embodiments in which only a small amount of hydrogen peroxide is required.

### Brief Summary of the Invention

The foregoing and other objects which will be apparent to those of ordinary skill in the art are achieved in accordance with the present invention by providing a new or improved method of abatement of hydrogen sulfide in aqueous media in which hydrogen sulfide in aqueous media is oxidized by reaction with hydrogen peroxide in the presence of a transition metal catalyst. In accordance with the present invention, the oxidisation reaction is effected using a mole ratio of hydrogen peroxide:hydrogen sulfide which is less than 1:1

### Description of Preferred Embodiments

The aqueous media to which the invention is applicable includes any containing hydrogen sulfide and particularly liquid media. It is known, of course, that hydrogen sulfide, as $H_2S$ exists in liquid aqueous media at pH below 9.5 while the $HS^-$ ionic form exists above 4.5 and $S^{2-}$ above 10.0, each existing as a mole fraction of the total sulfide content. Thus, at pH 7, the expression "total sulfides" is more precise than the expression "hydrogen sulfide". However, the expression "hydrogen sulfide" is fully understood and widely accepted in the art and is used herein. Thus, the total sulfides present in the aqueous media is referred to herein as hydrogen sulfide.

The invention has particular application to various municipal and industrial liquid wastes such as geothermal steam condensate, drilling fluids, paper mill effluent, sour water streams, sewage, and the like. The amount of hydrogen sulfide in these liquids can vary quite widely. Concentrations of hydrogen sulfide of from 1 to 5,000 ppm are often encountered. The present invention is applicable to these concentrations and is also applicable to lower and higher concentrations.

The hydrogen peroxide reagent is preferably a commercially available product such as a 50 wt% solution.

The mole ratio of hydrogen peroxide to hydrogen sulfide is less than 1, preferably 0.3 to 0.9:1, more preferably 0.4 to 0.8:1. A mole ratio of 0.5:1 is typical.

The pH of the system is adjusted to a predetermined optimum pH, and the preferred pH is within the range 5 to 8, more preferably from 6.5 to 7.5 and optimally 7. A pH of about 7 is optimal because the reaction rate is most rapid at that pH. As the pH increases or decreases, the reaction rate decreases. However, the rate is also rapid within the range of 5 to 8 and is quite rapid in the range of 6.5 to 7.5. Bases and acids such as sodium hydroxide and sulfuric acid are suitable agents for adjusting the pH.

The transition metal catalyst is preferably employed in an amount of $4.5 \times 10^{-4}$ moles as metal ion per mole of hydrogen sulfide, and more preferably from $4.5 \times 10^{-4}$ to $10^{-1}$ moles per mole of hydrogen sulfide. Suitable transition metals include iron (II), nickel (II), cobalt (II), titanium (III), manganese (IV), zinc (II) and vanadium (IV). Suitable salts include sulfate, chloride, and the like. Ferrous sulfate is a typical example.

The temperature of the oxidation reaction system can vary widely. Generally, the reaction proceeds more quickly at a higher temperature but proceeds quite rapidly at ambient. In general, the temperature will be from 15°C up to the boiling point of the liquid aqueous system, and usually the temperature will be from 20 to 90°C.

The reaction is preferably carried out at atmospheric pressure. However, if it is desired to minimize the loss of $H_2S$ off-gas during pH adjustment and prior to carrying out the process, the reaction may be carried out in a closed vessel which is provided with a vent for off-gasses. The vent may include a scrubber or other means for removal of any $H_2S$ off-gas which may be recycled for oxidation. If the reaction vessel is closed, the pressure may be maintained above atmospheric during the reaction.

Reaction time is preferably less than one minute, more preferably less than 20 seconds, and such reaction times are readily achieved in accordance with the present invention. In order to achieve a rapid reaction rate, the catalyst is preferably added to the aqueous sulfide media prior to the addition of the hydrogen peroxide. Accordingly, where rapid reaction rate is desired, the order of addition of these materials is important. Sulfide abatement within this reaction time is preferably at least 90%, more preferably at least 95%, by weight.

EXAMPLES I, II AND III

The Examples which follow are carried out in a water-jacketed closed reaction vessel provided with a stirrer, air lock, $H_2S$ analyzer (for off-gas analysis) pH meter, and ion analyzer (meter and sulfide ion selective electrode for determination of $H_2S$ concentration). Jacket water temperature is maintained by circulation to maintain initial reaction temperature. In each of the examples, the following procedure is followed:

1. The jacketed reaction vessel is filled with 1500 ml of demineralized water, desired temperature is set in the circulator bath, and the water is stirred at 150 RPM until it reaches thermal equilibrium.

2. The appropriate amount of stabilized sulfide stock solution is added to the vessel to obtain the desired ppm of sulfide. The vessel is then filled to 1600 ml. and allowed to reequilibrate to the reaction temperature.

3. The necessary amount of $FeSO_4 : 7H_2O$ solution is added to the vessel and mixed by stirring for about 3 minutes.

4. The desired pH of the solution is obtained by dropwise addition of concentrated $H_2SO_4$.

5. Immediately after pH adjustment, the required amount of $H_2O_2$ is added to the vessel. The reaction is monitored by recording simultaneously pH, mV, and gaseous $H_2S$ throughout the reaction.

6. At completion of the reaction, a sample of the reaction mix is obtained and the rest is dumped to waste.

7.  The reaction vessel is rinsed with copious amounts of demineralized water, washing with dilute $H_2SO_4$, and then rinsed again.

8.  The procedure is repeated for the next experiment.

0086592

## EXAMPLE I

Illustrated in this example is the abatement of hydrogen sulfide in demineralized water within the preferred treatment ratios at ambient temperature.

Mole Ratio    $Fe^{2+}:H_2S$      $9.0 \times 10^{-4}:1.0$
Mole Ratio    $H_2O_2:H_2S$       $0.5:1.0$
Total Sulfides                    110 ppm
Temperature                      25°C

| Time (Sec) | pH | Total Sulfides (ppm) | $H_2S$ Abatement |
|---|---|---|---|
| 0 | 7 | 110. | 0. |
| 1 | 7 | 22.3 | 79.7 |
| 2 | 7 | 20.6 | 81.3 |
| 3 | 7 | 16.8 | 90.2 |
| 4 | 7 | 7.8 | 92.9 |
| 5 | 7 | 7.1 | 93.5 |
| 6 | 7 | 6.6 | 94.0 |
| 7 | 7 | 6.2 | 94.4 |
| 8 | 7 | 5.7 | 94.8 |
| 9 | 7 | 5.7 | 94.8 |
| 10 | 7 | 5.7 | 94.8 |
| 11 | 7 | 5.7 | 94.8 |
| 12 | 7 | 5.7 | 94.8 |

## EXAMPLE II

Abatement of hydrogen sulfide in demineralized water at 50°C.

| Mole Ratio | $Fe^{2+}:H_2S$ | | $4.5 \times 10^{-4}:1.0$ |
|---|---|---|---|
| Mole Ratio | $H_2O_2:H_2S$ | | 0.5:1.0 |
| Total Sulfides | | | 110 ppm |
| Time (Sec) | pH | Total Sulphides (ppm) | $H_2S$ Abatement % |
| 1 | 6.97 | 110. | 0. |
| 2 | 6.92 | 3.7 | 96.6 |
| 3 | 6.92 | 6.2 | 94.4 |
| 4 | 6.94 | 6.2 | 94.4 |
| 5 | 6.95 | 5.7 | 94.8 |
| 6 | 6.95 | 5.2 | 94.8 |
| 7 | 6.95 | 5.2 | 95.3 |
| 8 | 6.95 | 5.2 | 95.3 |
| 9 | 6.95 | 5.2 | 95.3 |
| 10 | 6.95 | 4.4 | 96.0 |
| 11 | 6.95 | 4.1 | 96.3 |
| 12 | 6.95 | 3.7 | 96.9 |

## EXAMPLE III

This example shows the abatement of $H_2S$ from a sample of geothermal condensate at 50°C

| Mole Ratio | $Fe^{2+}:H_2S$ | $4.5 \times 10^{-4}:1.0$ |
|---|---|---|
| Mole Ratio | $H_2O_2:H_2S$ | $0.5:1.0$ |
| Total Sulfides | | 62 ppm |

| Time (Sec) | pH | Total Sulphides (ppm) | $H_2S$ Abatement (%) |
|---|---|---|---|
| 1 | 7.0 | 62. | 0 |
| 2 | 7.0 | 0.2 | 99 |
| 3 | 7.0 | 10 ppb | 99 |

TY· EU CLS

CLAIMS:

1.   A method of the abatement of hydrogen sulphide in
     aqueous media in which hydrogen sulphide in aqueous
     media is oxidized by reaction with hydrogen peroxide
     characterised by using a mole ratio of hydrogen
     peroxide:hydrogen sulphide which is less than 1:1 in
     the presence of a transition metal catalyst.

2.   A method according the claim 1 characterised in that
     the mole ratio of hydrogen peroxide:hydrogen sulfide is
     from 0.3 to 0.9:1.

3.   A method according to claim 3 characterised in that the
     mole ratio of hydrogen peroxide:hydrogen sulfide is
     from 0.4 to 0.8:1.

4.   A method according to claim 4 characterised in that the
     mole ratio of hydrogen peroxide:hydrogen sulfide is
     0.5:1.

5.   A method according to any preceding claim characterised
     in that the transition metal is present in an amount of
     $4.5 \times 10^{-4}$ to $2 \times 10^{-1}$ moles per mole of hydrogen
     sulfide.

6.   A method according to any preceding claim characterised
     in that said transition metal comprises iron.

7.   A method according to any of claims 1 to 6
     characterised in that said transition metal comprises
     at least one member selected from the group consisting
     of titanium, nickel, cobalt, manganese, zinc, and
     vanadium.

8.   A method according to any preceding claim characterised

IX4 EU CLS

in that said transition metal catalyst is added to the aqueous media prior to the addition thereto of said hydrogen peroxide.

9. A method according to any preceding claim which is effected at a pH of 5 to 8.

10. A method according to claim 9 which is effected at a pH of 6.5 to 7.5.

11. A method according to claim 10 which is effected at a pH of 7.

European Patent
Office

**EUROPEAN SEARCH REPORT**

Application number

EP 83 30 0519

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| X | US-A-4 292 293  (D.A. JOHNSON et al.) <br> * Whole document * | 1-11 | C 02 F  1/72 |
| A | EP-A-0 022 526  (BAYER) <br> * Pages 14-15 * | 1-11 | |
| A | CH-A- 605 421  (SCHWEIZERISCHE SODAFABRIK) <br> * Whole document * | 1-11 | |

TECHNICAL FIELDS
SEARCHED (Int. Cl. ³)

C 02 F

The present search report has been drawn up for all claims

| Place of search <br> THE HAGUE | Date of completion of the search <br> 18-05-1983 | Examiner <br> VAN AKOLEYEN H.T.M. |
|---|---|---|

BAD ORIGINAL